# EUROPEAN PATENT APPLICATION

(11) **EP 2 759 962 A1**
(43) Date of publication of application: **30.07.2014**
(21) Application number: 13152472.0
(22) Date of filing: 24.01.2013
(51) Int. Cl.: G06K 19/077, G06K 19/07

(54) **Radio frequency identification tag**

(71) Applicant: King's Metal Fiber Technologies Co., Ltd., Taichung City (TW)
(72) Inventor: Huang, Hong-Hsu, Taipei City (TW); Yang, Shun-Tung, Taipei City (TW); Peng, Jung-Hsiang, Taipei City (TW)
(74) Representative: Viering, Jentschura & Partner Patent- und Rechtsanwälte

(57) **Abstract**

A radio frequency identification (RFID) tag includes a substrate; an RFID chip, which is mounted on the substrate; and at least one external communication antenna, which transmits signals with respect to the RFID chip in a wireless manner and is spaced therefrom by a predetermined distance. With the transmission of signals between the external communication antenna and the RFID chip in a wireless manner, the durability and easiness of use of the RFID tag are improved.

## Description

### FIELD OF THE INVENTION

The present invention relates to a radio frequency identification (RFID) tag, and in particular to an RFID tag comprising an external communication antenna and an RFID chip that transmit signals in a wireless manner.

### BACKGROUND OF THE INVENTION

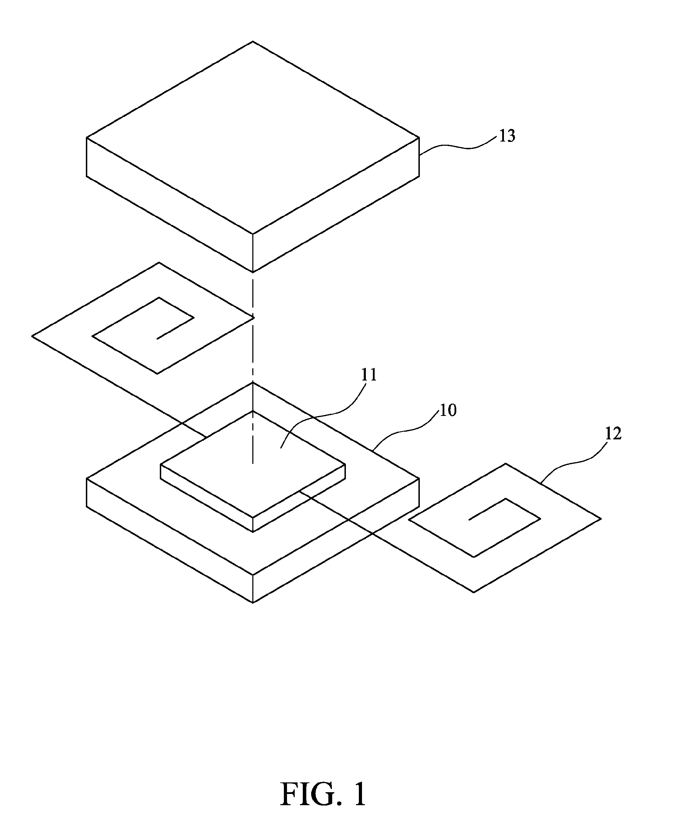

As shown in Figure 1, a conventional RFID tag generally comprises a substrate 10 that carries an RFID chip 11, two receiving/transmission antenna 12 electrically connected to the RFID chip 11, a packaging shell 13 covering the substrate 10, with the RFID chip 11 and a portion of the receiving/transmission antenna 12 being enclosed in the shell 13. Since the size of the transmitting/receiving antenna 12 will affect the radio frequency recognition range, the conventional receiving/transmission antenna 12 that is connected to an RFID tag is of a relatively large size. Thus, in practical applications, a number of problems occur. The relatively large size of the receiving/transmission antenna 12 is easily damaged and a damaged antenna may result in poor recognition by a recognition system.

In view of these problems, the present invention aims to provide an RFID tag that comprises micro receiving/transmission antenna in order to extend the lifespan of product.

### SUMMARY OF THE INVENTION

A primary object of the present invention is to provide an RFID tag that comprises an external communication antenna and an RFID chip transmitting signals with respect to each other in a wireless manner.

To achieve the above object, the present invention provides a radio frequency identification (RFID) tag, which comprises a substrate; an RFID chip, which is mounted on the substrate; and at least one external communication antenna, which transmits signals with respect to the RFID chip in a wireless manner and is spaced therefrom by a predetermined distance.

In the RFID tag as described above, the RFID tag comprises an encapsulation covering the substrate.

In the RFID tag as described above, the encapsulation is in the form of a shell or a resin body.

In the RFID tag as described above, wherein the external communication antenna is mounted in the encapsulation.

The RFID tag as described above further comprises at least one micro antenna, which is positioned on the substrate and is electrically connected to the RFID chip. The external communication antenna transmits signals with respect to the RFID chip in a wireless manner through the micro antenna.

### BRIEF DESCRIPTION OF THE DRAWINGS

The present invention will be apparent to those skilled in the art by reading the following description of preferred embodiments thereof with reference to the drawings, in which:

Figure 1 is a perspective view showing a conventional radio frequency identification (RFID) tag;

Figure 2 is a perspective view showing an RFID tag according to a first embodiment of the present invention;

Figure 3 is a schematic view illustrating an application of the RFID tag of the first embodiment of the present invention;

Figure 4 is a perspective view showing an RFID tag according to a second embodiment of the present invention;

Figure 5 is a schematic view illustrating an application of the RFID tag of the second embodiment of the present invention; and

Figure 6 is a perspective view showing an RFID tag according to a third embodiment of the present invention.

### DETAILED DESCRIPTION OF THE PREFERRED EMBODIMENTS

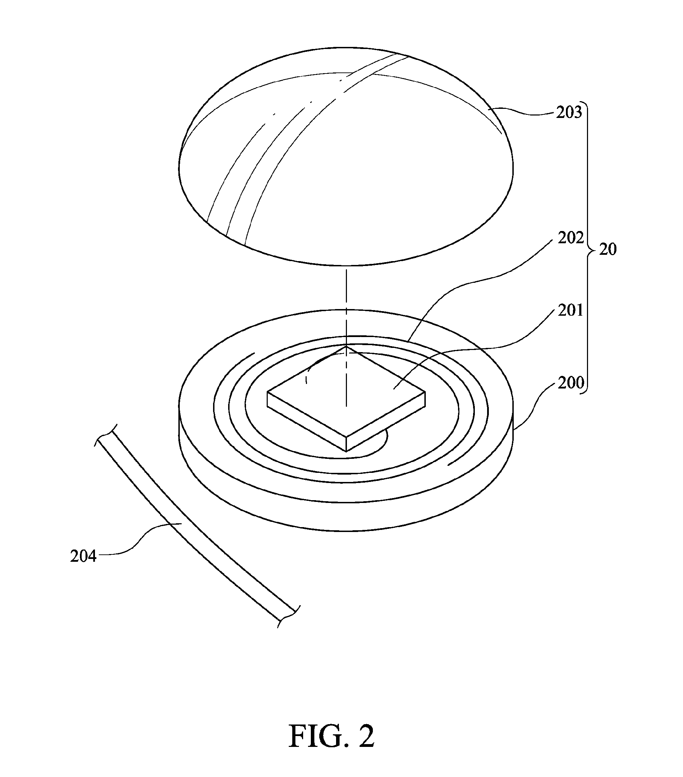

With reference to the drawings and in particular to Figure 2, which is a perspective view showing a radio frequency identification (RFID) tag according to a first embodiment of the present invention, as shown in the drawing, in the instant embodiment, the RFID tag 20 comprises a substrate 200; an RFID chip 201, which is mounted on the substrate 200; two micro antennas 202, which are positioned on the substrate 200 and are electrically connected to the RFID chip 201; an encapsulation 203 (which is in the form of a shell in the instant embodiment) that covers the substrate 200 and completely encloses the RFID chip 201 and the micro antennas 202; and an external communication antenna 204, which transmits signals with respect to the micro antennas 202 in a wireless manner and is mounted to the shell 203.

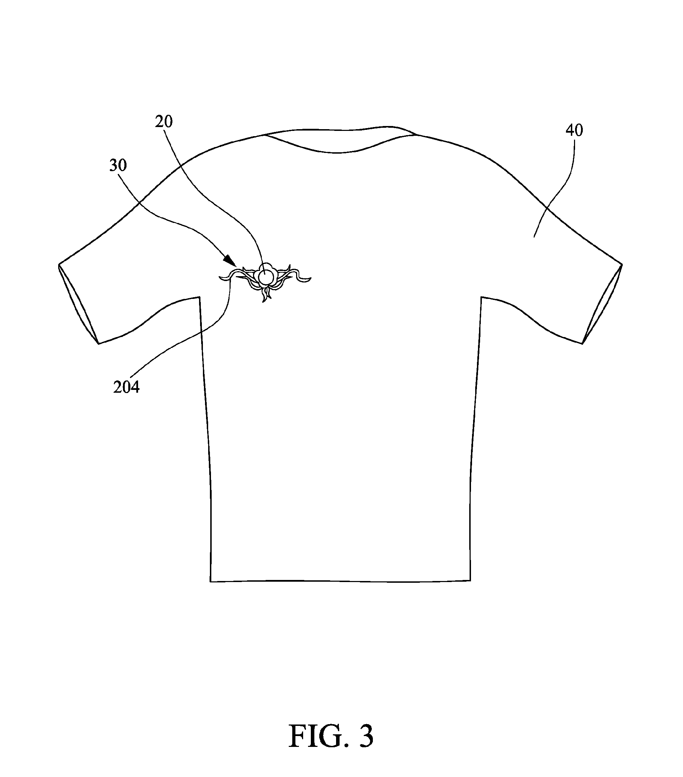

Referring to Figure 3, which is a schematic view illustrating an application of the RFID tag of the first embodiment of the present invention, as shown in the drawing, in the instant embodiment, the RFID tag 20 is combined with a brooch 30. The RFID tag 20 is arranged as a decorative jewel attached to the brooch 30, where the external communication antenna 204 is configured to mate the arrangement of the brooch 30, so that the overall outside configuration looks like a true brooch. To operate, the brooch 30 is attached to a garment 40 and a reading device may then be applied to access data through the external communication antenna 204, which expands the range where the signal can be received.

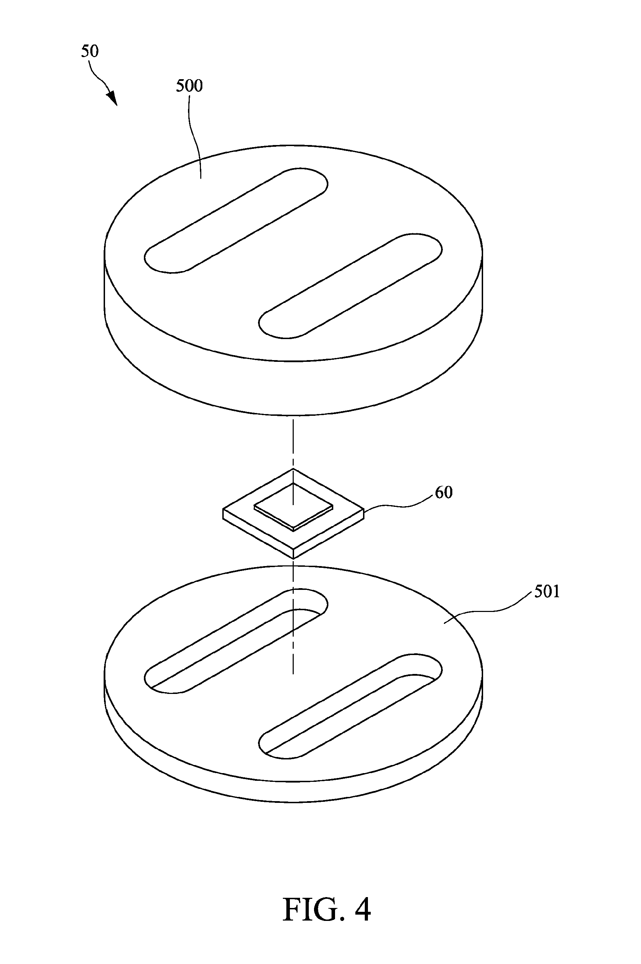

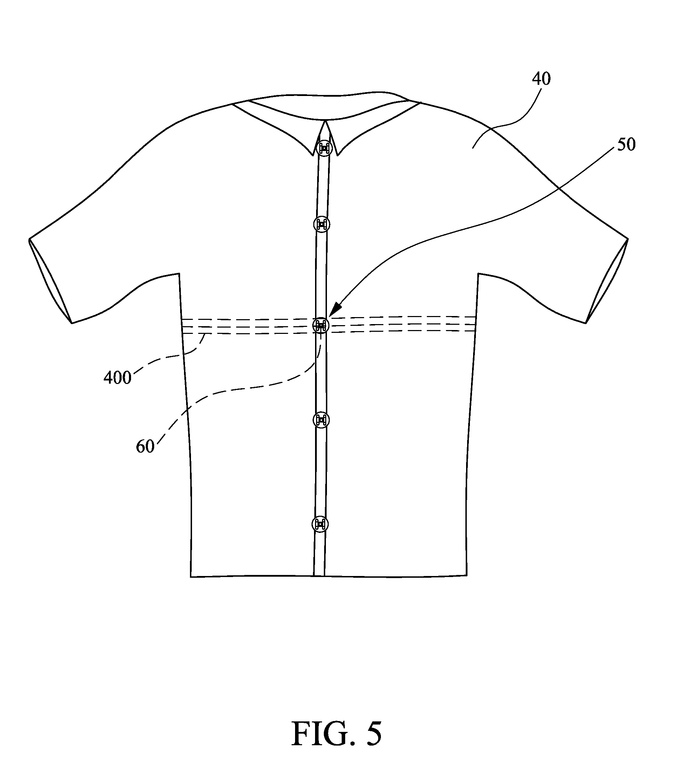

Referring to Figure 4, which is a perspective view showing an RFID tag according to a second embodiment of the present invention, as shown in the drawing, the RFID tag 60 according to the present invention is combined with a button 50. The button 50 comprises a first body 500 and a second body 501. The RFID tag 60 is mounted on the second body 501 and the first body 500 and the second body 501 are coupled to each other to form a button. In the instant embodiment, the RFID tag 60 is encapsulated with resin. Referring to Figure 5, which is a schematic view illustrating an application of the RFID tag of the second embodiment of the present invention, as shown in the drawing, the button 50 that is combined with the RFID tag 60 is sewn to a garment 40. Since the RFID tag 60 needs an external communication antenna, for the garment 40 used in the instant embodiment, fine metal wires 400 are woven in the garment 40 to serve as the external communication antenna required by the RFID tag 60. By mounting a button 50 comprising an RFID tag 60 according to the present invention, when the garment is sent to a laundry for cleaning, the antennas of the RFID tag 60 are enclosed by the encapsulation and may not be easily damaged.

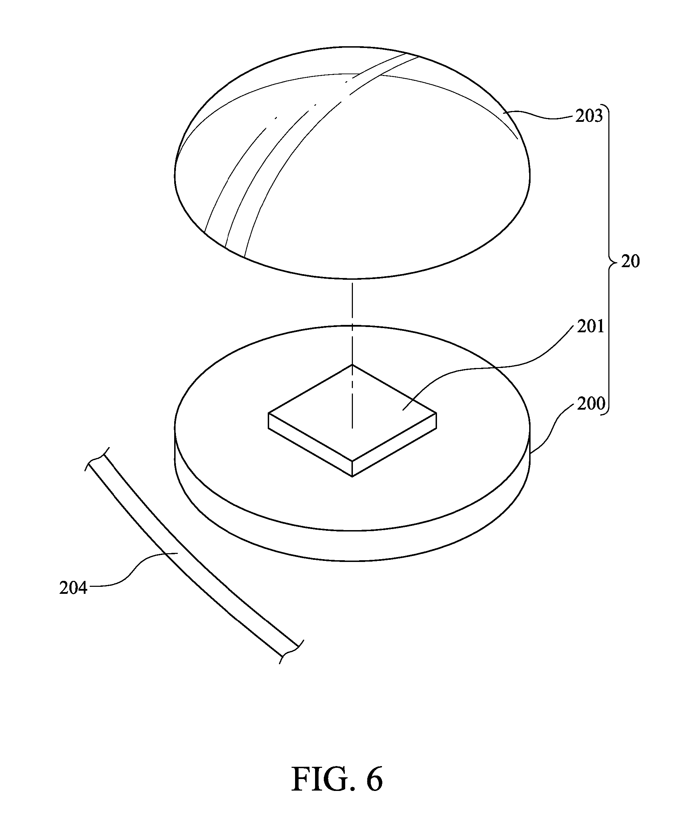

Referring to Figure 6, which is a perspective view showing an RFID tag according to a third embodiment of the present invention, as shown in the drawing, in the instant embodiment, an RFID tag 20 comprises a substrate 200; an RFID chip 201, which is mounted on the substrate 200; and an external communication antenna 204, which transmits signals with respect to the RFID chip 201 in a wireless manner and is mounted to the shell 203. In the instant embodiment, the external communication antenna 204 directly and wirelessly transmit signals with respect to the RFID chip 201 and is applicable in a situation where the distance between the external communication antenna 204 and the RFID chip 201 is relatively small. In the instant embodiment, an encapsulation 203 may be additionally included to cover the substrate 200 and completely enclose the RFID chip 201.

The RFID tag as described above is applicable to instantaneous monitoring of various links of a supply chain of garment from product design, material acquisition, manufacture, transportation, warehousing, distribution, sales, and product returning and after service for semi-finish product and final product, allowing precise acquisition of all information related to products, such as types, manufacturers, production times and locations, colors, sizes, quantities, and arrival location, and receivers and also improving the durability of an RFID tag, whereby the present invention is effective in overcoming the shortcomings of the prior art techniques.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A radio frequency identification (RFID) tag, comprising:
an RFID chip, which is mounted on the substrate; and
at least one external communication antenna, which transmits signals with respect to the RFID chip in a wireless manner and is spaced therefrom by a predetermined distance.

2. The RFID tag as claimed in Claim **1,** wherein the RFID tag comprises an encapsulation covering the substrate.

3. The RFID tag as claimed in Claim **2,** wherein the encapsulation is in the form of a shell.

4. The RFID tag as claimed in Claim **2,** wherein the encapsulation comprises resin.

5. The RFID tag as claimed in Claim **2,** wherein the external communication antenna is mounted in the encapsulation.

6. The RFID tag as claimed in Claim **1** further comprising at least one micro antenna, which is positioned on the substrate and is electrically connected to the RFID chip, the external communication antenna transmitting signals with respect to the RFID chip in a wireless manner through the micro antenna.
